# EUROPEAN PATENT APPLICATION

(11) **EP 4 718 227 A1**
(43) Date of publication of application: **01.04.2026**
(21) Application number: 24810363.2
(22) Date of filing: 20.05.2024
(51) Int. Cl.: G06F 3/04845, G06F 3/04842, G06T 7/90

(54) **IMAGE PROCESSING METHOD AND APPARATUS, DEVICE, COMPUTER READABLE STORAGE MEDIUM, AND PRODUCT**

(30) Priority: 23.05.2023 CN 202310593722
(71) Applicant: Beijing Zitiao Network Technology Co., Ltd., Beijing 100190 (CN)
(72) Inventor: CHEN, Tianqi, Beijing 100028 (CN); XUE, Hao, Beijing 100028 (CN)
(74) Representative: Isarpatent
(86) International application number: PCT/CN2024/094313
(87) International publication number: WO 2024/240121

(57) **Abstract**

The embodiments of the disclosure provides methods, apparatuses, devices, computer readable storage medium and products for image processing. The method includes: displaying an image processing page, wherein the image processing page comprises an image to be processed and a predetermined processing control, and the image to be processed is composed of at least one image material and a decoration material; presenting a color processing page in response to a triggering operation on the processing control, wherein the color processing page comprises at least one color processing category, and at least some of the color processing categories comprise at least one color card composed of different colors; determining a target color card selected by a user in response to a selection operation on the color processing page; performing an adjustment operation on a color of the decoration material associated with the image to be processed based on the target color card to obtain a target image. The display effect of the adjusted target image can be optimized, and the color adjustment can better conform to the personalized requirement of the user.

## Description

This application claims the priority to Chinese Patent Application No. 2023105937221, entitled "Method, Apparatus, Device, Computer Readable Storage Medium and Product for Image Processing", filed May 23, 2023, the entirety of which is incorporated herein by reference.

### TECHNICAL FIELD

The embodiments of the disclosure relate to the technical field of interface interaction, in particular to methods, apparatuses, devices, computer readable storage media and products for image processing.

### BACKGROUND

**In** order to obtain a better display effect of an image, the user generally needs to perform operations such as color adjustment on the image.

However, the current color adjustment operation may only adjust the color of some regions of the entire image one by one based on the content such as the color selected by the user, resulting in a relatively single image processing effect and inability to achieve color matching effect for different materials in the entire image.

### SUMMARY

The embodiments of the disclosure provide methods, apparatuses, devices, computer readable storage medium and products for image processing, in order to solve the technical problem that the existing image color adjustment method is relatively single in adjustment effect.

**In** a first aspect, the embodiments of the disclosure provide a method of image processing, comprising: displaying an image processing page, wherein the image processing page comprises an image to be processed and a predetermined processing control, and the image to be processed is composed of at least one image material and a decoration material; presenting a color processing page in response to a triggering operation on the processing control, wherein the color processing page comprises at least one color processing category, and at least some of the color processing categories comprise at least one color card composed of different colors; determining a target color card selected by a user in response to a selection operation on the color processing page; performing an adjustment operation on a color of the decoration material associated with the image to be processed based on the target color card to obtain a target image.

In a second aspect, the embodiments of the disclosure provide an apparatus for image processing, comprising: a displaying module configured to display an image processing page, wherein the image processing page comprises an image to be processed and a predetermined processing control, and the image to be processed is composed of at least one image material and a decoration material; a presenting module configured to present a color processing page in response to a triggering operation on the processing control, wherein the color processing page comprises at least one color processing category, and at least some of the color processing categories comprise at least one color card composed of different colors; a determining module configured to determine a target color card selected by a user in response to a selection by the user on the color processing page; and an adjusting module configured to perform an adjustment operation on a color of the decoration material associated with the image to be processed based on the target color card to obtain a target image.

In a third aspect, the embodiments of the disclosure provide an electronic device, comprising: a processor and a memory; the memory stores computer executable instructions; the processor executes the computer executable instructions stored in the memory, causing at least one processor to execute the method of image processing according to the first aspect and various possible designs thereof.

In a fourth aspect, the embodiments of the disclosure provide a computer-readable storage medium storing computer-executable instructions which, when executed by a processor, implement the method of image processing according to the first aspect and various possible designs thereof.

In a fifth aspect, the embodiments of the disclosure provide a computer program product, comprising a computer program, wherein the computer program, when executed by a processor, implements the method of image processing according to the first aspect and various possible designs thereof.

### BRIEF DESCRIPTION OF DRAWINGS

In order to more clearly illustrate the solutions of embodiments of the disclosure or the prior art, the accompanying drawings used in the description of the embodiments or the prior art will be briefly introduced below. It will be apparent that the drawings in the following description are some embodiments of the disclosure, and those skilled in the art may also obtain other drawings based on these drawings without creative labor.
FIG. 1 is a schematic flowchart of a method of image processing according to an embodiment of the present disclosure;
FIG. 2 is a schematic diagram of interface interaction according to an embodiment of the present disclosure;
FIG. 3 is a schematic flowchart of a method of image processing according to another embodiment of the present disclosure;
FIG. 4 is another schematic diagram of page interaction according to an embodiment of the present disclosure;
FIG. 5 is a schematic diagram of a display interface according to an embodiment of the present disclosure;
FIG. 6 is a schematic flowchart of a method of image processing according to still another embodiment of the present disclosure;
FIG. 7 is a schematic structural diagram of an apparatus for image processing according to an embodiment of the present disclosure;
FIG. 8 is a schematic structural diagram of an electronic device according to an embodiment of the present disclosure.

### DETAILED DESCRIPTION

In order to make the objectives, technical solutions and advantages of the embodiments of the present disclosure clearer, the technical solutions in the embodiments of the disclosure will be clearly and completely described below with reference to the accompanying drawings in the embodiments of the disclosure. All other embodiments obtained by those skilled in the art based on the embodiments of the disclosure without creative efforts shall fall within the scope of the present disclosure.

In order to solve the technical problem of the relatively single adjustment effect of existing image color adjustment methods, this disclosure provides a method, an apparatus, a device, a computer-readable storage medium, and a product for image processing.

It should be noted that the method, apparatus, device, computer-readable storage medium, and product for image processing provided by the present disclosure may be applied to any application scenario for performing local color adjustment on an image.

Current image color processing methods generally require a user to select a corresponding filter to perform global color processing on an image according to actual requirements. However, the obtained display effect of the images often cannot meet the personalized requirements of users.

In the process of solving the above technical problem, the inventor finds that when the image to be processed includes the image material and the decoration material, in order to achieve targeted color adjustment to the decoration material and make the color adjustment result more consistent with the personalized requirement of the user, a plurality of different color processing categories may be set in advance. Each color processing category includes at least one color card composed of different colors. Thus, the user can select a corresponding target color card based on the actual demand, and perform color adjustment on the decoration material based on the target color card. In some embodiments, the color matching in the target color card may be harmonized color, so that after the color adjustment is performed based on the target color card, the display effect of the target image may be improved.

Further, the image to be processed and the processing control may be displayed in the image processing page. A predetermined color processing page is presented in response to a triggering operation of the user on the processing control, and the plurality of color cards are displayed in the color processing page. In response to a selection operation by the user on the color processing page, the target color card selected by the user is determined. An adjustment operation is performed on the color of the decoration material associated with the image to be processed based on the target color card, to obtain a target image. Therefore, the user can adjust the image color through a simple page interaction operation, and the image color adjustment efficiency is improved.

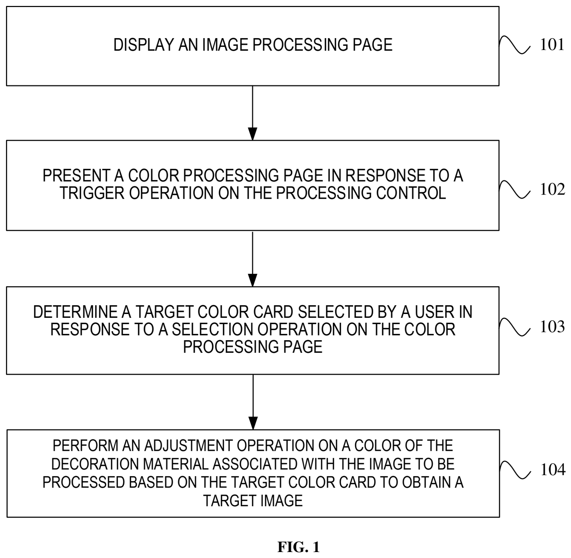

FIG. 1 is a schematic flowchart of a method of image processing according to an embodiment of the present disclosure.

Step 101: displaying an image processing page. In some embodiments, the image processing page comprises an image to be processed and a predetermined processing control, and the image to be processed is composed of at least one image material and a decoration material.

The execution body of this embodiment is an apparatus for image processing. The apparatus for image processing may be coupled to the terminal device, so that an image color adjustment operation may be implemented based on a triggering operation of the user on the terminal device. In some embodiments, the apparatus for image processing may also be coupled to a server. The server can be in communication connection with the terminal device, so that an image processing operation triggered by the user on the terminal device may be obtained. The image color adjustment is performed based on the image processing operation. The terminal device is controlled to display the adjusted target image.

In this implementation, the image processing page may be displayed on the display interface. In some embodiments, the image processing page includes an image to be processed and a predetermined processing control. The image to be processed may be selected by the user in the terminal device according to actual needs, or may be automatically generated based on at least one image material provided by the user. In some embodiments, the image to be processed includes at least one image material and a decoration material. The decoration material includes at least one of a background decoration, a text decoration, and a pattern decoration.

In order to make the display effect of the image to be processed more conform to the personalized requirement of the user, after the image to be processed is obtained, the color of the image to be processed is adjusted based on the actual requirement of the user. Therefore, the processing control may be set in advance in the image processing page, and the user may perform the image processing operation based on the processing control.

For example, in the practical application, the image to be processed may be a poster corresponding to an article. The poster may include at least one image corresponding to the article and a text description corresponding to the article. In addition, in order to enrich the image effect, content such as pattern decoration may also be included in the poster.

Step 102: presenting a color processing page in response to a triggering operation on the processing control. In some embodiments, the color processing page comprises at least one color processing category, and at least some of the color processing categories comprise at least one color card composed of different colors.

In this implementation, after the image processing page is displayed, the color processing page may be presented in response to the triggering operation of the user on the processing control in the image processing page. Within the color processing page, the user may adjust the color of the image to be processed.

In the color processing page, at least one color processing category may be included, and at least some of the color processing categories include at least one color card composed of different colors.

For example, in the practical application, the color processing category may include a gradient color category, a recently used color processing category by the user, and a recommended color processing category. In some embodiments, the gradient color category may include a color card composed of different gradient colors corresponding to different colors. The recently used color processing category may include at least one color card used by the user in a predetermined time range. The recommended color processing category may include a recommended color card composed of a plurality of predetermined harmonious colors.

Step 103: determining a target color card selected by a user in response to a selection operation on the color processing page.

In this implementation, the user may select from the at least one color processing category according to actual requirements to determine the target color card.

In some embodiments, the user may determine the target color card by performing a predetermined triggering operation on any color card. In some embodiments, the predetermined triggering operation includes but is not limited to a single-click, double-click, long-press operation, and the like.

Step 104: performing an adjustment operation on a color of the decoration material associated with the image to be processed based on the target color card to obtain a target image.

In this implementation, after the target color card is determined, the color of the decoration material associated with the image to be processed may be adjusted based on the target color card to obtain the target image.

Continuing with above example, when the image to be processed is a poster, the background color, the text decoration color and the pattern decoration color of the poster may be adjusted to the color in the target color card based on the target color card selected by the user, without adjusting the image material. Therefore, the rapid color adjustment of the decoration material can be realized, and the adjustment result is more consistent with the personalized requirement of the user.

Further, on the basis of any of the above embodiments, after step 102, the method further includes:
switching to present, in response to a sliding operation by the user in a predetermined direction in the color processing page, color cards corresponding to different color processing categories.

In this embodiment, the number of color processing categories may be multiple, and cannot be completely displayed in the color processing page. Therefore, in order to view more color cards corresponding to the color processing categories, in response to the sliding operation of the user in the predetermined direction in the color processing page, the color cards corresponding to different color processing categories may be switched to be presented. Therefore, the user may flexibly switch the page display content according to actual requirements.

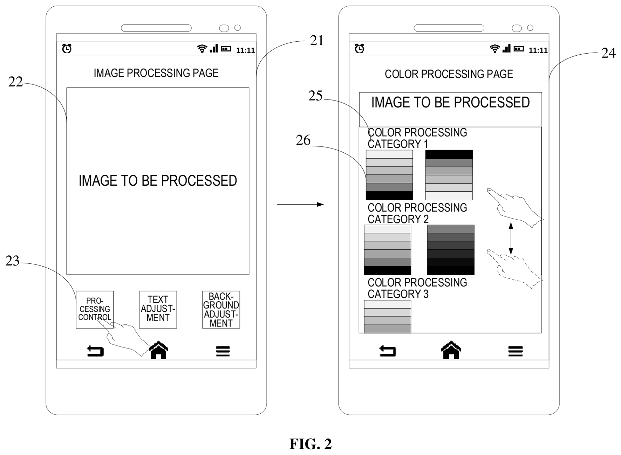

FIG. 2 is a schematic diagram of an interface interaction according to an embodiment of the present disclosure. As shown in FIG. 2, the image processing page 21 displays an image 22 to be processed and a predetermined processing control 23. In response to a triggering operation of the user on the processing control, a color processing page 24 may be displayed. In some embodiments, the color processing page 24 includes at least one color processing category 25, and each color processing category 25 includes at least one color card 26 composed of different colors. The user may switch the display of the color processing category 25 by sliding up and down or sliding left and right within the color processing page 24.

In the method of image processing provided by this embodiment, a color processing page may be presented by triggering a predetermined processing control in the image processing page. A plurality of color processing categories are presented in the color processing page. In some embodiments, at least some of the color processing categories correspond to color cards. Therefore, the user may select the target color card based on actual requirements, and make targeted adjustment individually on the decoration material in the image to be processed according to the at least one color in the target color card. The display effect of the adjusted target image can be optimized, and the color adjustment can better conform to the personalized requirement of the user. In addition, the user may adjust the image color through a simple interface interaction operation, thereby improving the efficiency of image color adjustment.

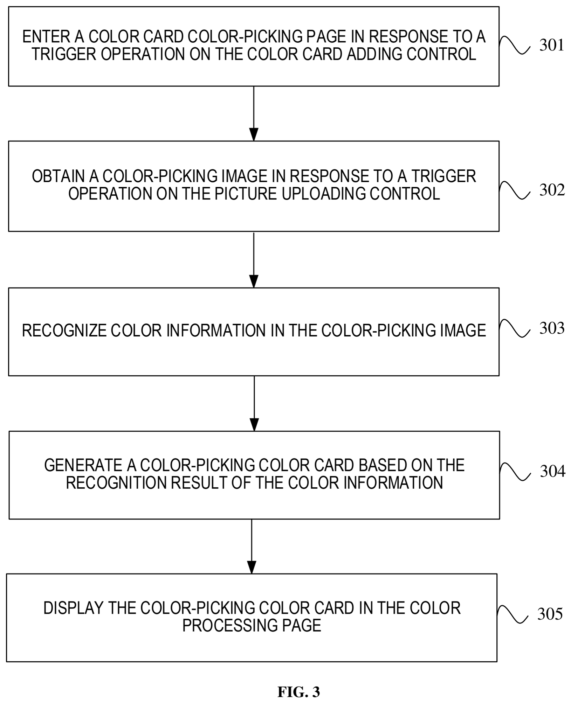

FIG. 3 is a schematic flowchart of a method of image processing according to another embodiment of the present disclosure. On the basis of any of the above embodiments, the color processing page further comprises a color card adding control. As shown in FIG. 3, after step 102, the method further includes:

Step 301: entering a color card color-picking page in response to a trigger opertion on the color card adding control. In some embodiments, the color card color-picking page comprises a picture uploading control.

Step 302: obtaining a color-picking image in response to a triggering operation on the picture uploading control.

Step 303: recognizing color information in the color-picking image.

Step 304: generating a color-picking color card based on a recognition result of the color information.

Step 305: displaying the color-picking color card in the color processing page.

In this embodiments, the color card processing category may specifically include a first color processing category. In some embodiment, the first color category may include a color card corresponding to an image generated by the user. Therefore, based on the color card corresponding to the first color processing category, the color of the image to be processed may be adjusted to the color corresponding to the image generated by the user.

In some embodiments, the color processing page further includes a color card adding control. In response to the triggering operation performed by the user on the color card adding control, the color-picking image generated by the user is obtained. In some embodiments, the color-picking image may be captured in real time by the user, or may be selected and uploaded by the user in a predetermined storage path, which is not limited in the present disclosure.

Further, after the color-picking image is obtained, the color information in the color-picking image may be recognized to obtain a recognition result. A color-picking color card corresponding to the color-picking image is generated based on the recognition result. The color-picking color card corresponding to the color-picking image is displayed in the color processing page.

In an implementation, in order to add the color card in the first color processing category, a color card adding page may be displayed in response to the triggering operation by the user on the color card adding control. In some embodiments, the color card adding page displays a color palette, a hue slider, a color value input control, and a color display control. The user may customize different colors based on the hue slider, the color value input control. A customized color card may be generated based on at least one color customized by the user.

According to the method of image processing provided in this embodiment, in response to the triggering operation by the user on the adding control, the color-picking image generated by the user is obtained. The color card is generated based on the color-picking image. Thus, the user is able to adjust the color of the image to be processed to the color matching the color-picking image. Therefore, the display effect of the adjusted target image is more consistent with the personalized requirement of the user. Moreover, the image color adjustment is rapidly realized without color matching performed by the user.

Further, on the basis of any of the above embodiments, after step 302, the method further includes:
displaying the color-picking image in a first display area in the color card color-picking page, and displaying a color-picking color card associated with the color-picking image in a second display area in the color card color-picking page.

In this embodiment, in order to make the user more intuitively view the currently generated color-picking image and the associated color information on the display interface, after performing color recognition on the color-picking image, the predetermined color card color-picking page may be presented. The color-picking image is displayed in the first display area in the color card color-picking page, and the color-picking color card associated with the color-picking image in the second display area in the color card color-picking page.

In some embodiments, the first display area and the second display area may be distributed left and right, or may be distributed up and down, or the second display area may be displayed in the first display area in a picture-in-picture manner. The display sizes of the first display area and the second display area may be the same, or the display size of the second display area may be smaller than the first display size. As a possible implementation, the user may adjust the display positions and the display sizes of the first display area and the second display area according to actual requirements. The present disclosure does not limit the display positions and display sizes of the first display area and the second display area.

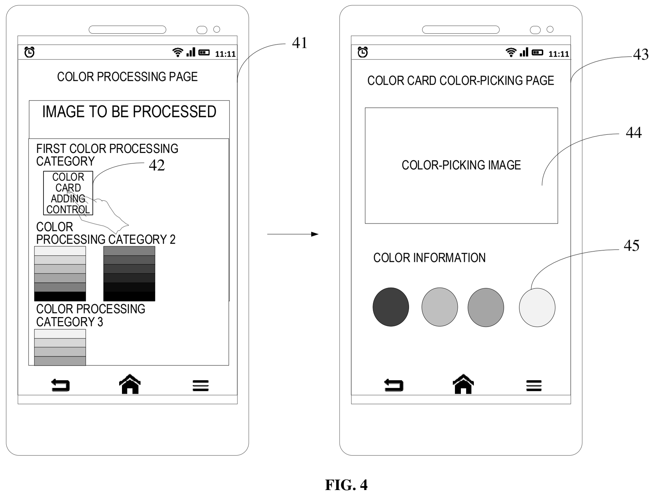

FIG. 4 is a schematic diagram of another interface interaction according to an embodiment of the present disclosure. As shown in FIG. 4, the color processing page 41 includes a color card adding control 42 associated with a first color processing category. In response to the triggering operation by the user on the color card adding control 42, the color-picking image 43 generated by the user may be obtained. The color information in the color-picking image 43 is recognized. The first display area in the color card color-picking page 44 displays the color-picking image 43, and the second display area in the color card color-picking page 44 displays the color-picking color card 45 associated with the color-picking image.

According to the method of image processing provided by the embodiment, the color-picking image is displayed in the first display area in the color card color-picking page, and the color-picking color card associated with the color-picking image is displayed in the second display area in the color card color-picking page, so that the user may view the currently generated color-picking image and the associated color-picking color card on the display page more intuitively, and the user experience is improved.

Further, on the basis of any of the above embodiments, the first display area further comprises a predetermined switching control. The method further comprises: obtaining a color-picking replacement image in response to a triggering operation on the switching control, and switching to display the color-picking replacement image in the first display area; recognizing color information in the color-picking replacement image, and displaying a color-picking color card of the color-picking replacement image in the second display area.

In this embodiment, after the color recognition is performed on the color-picking image to obtain the corresponding color-picking color card, the user may switch the color-picking image according to the actual requirement, so that the finally generated color-picking color card is closer to the personalized requirement of the user.

In some embodiments, the first display area further includes a predetermined switching control. In response to the triggering operation of the user on the switching control, the color-picking replacement image generated by the user may be obtained, and the color-picking replacement image is switched and displayed in the first display area. In some embodiments, the color-picking replacement image may be captured in real time by the user, or may be selected and uploaded by the user in a predetermined storage path, which is not limited in the present disclosure.

The color information in the color-picking replacement image is recognized, and the color-picking color card of the replacement image is displayed in the second display area. In some embodiments, the way of color recognition of the replacement image may be the same as the way of color recognition of the color-picking image, which is not limited in the present disclosure.

According to the method of image processing provided by the embodiment, by setting the switching control, the user may more flexibly realize the switch of the color-picking image based on the switching control. Thus, the finally generated color-picking color card is more suitable for the personalized requirement of the user, and the user experience is improved.

Further, on the basis of any of the above embodiments, after the color-picking color card associated with the color-picking image is displayed in the second display area in the color card color-picking page, the method further includes: displaying a color editing page associated with the target color information in response to a triggering operation by the user on any target color information in the color-picking color card. In some embodiments, the color editing page includes a color palette, a hue slider, a color value input control, and a color display control.

The target color information is edited, in response to an editing operation triggered by the user on the color editing color page based on the hue slider and/or the color value input control.

In this embodiment, for the color-picking color card corresponding to the color-picking image, the user may perform a personalized editing operation on any color in the color-picking color card according to actual requirements. In this way, the finally generated color-picking color card is closer to the personalized requirement of the user.

In some embodiments, a color editing page associated with the target color information may be displayed in response to a triggering operation by the user on any target color information. In some embodiments, the color editing page includes a color palette, a hue slider, a color value input control, and a color display control. The user may realize the editing operation on the color by the hue slider and/or the color value input control. The target color information is edited, in response to an editing operation triggered by the user on the color editing color page based on the hue slider and/or the color value input control.

For example, the user may input specific color value information through the color value input control, and determine the color edited by the user based on the color value information. Alternatively, the user may edit the target color information by sliding the hue slider on the color palette. Alternatively, the above two implementations may be implemented in combination. For example, the user may input specific color value information through the color value input control. Then, the color corresponding to the color value information may be displayed on the color palette. The user may further interact with the color palette through the slider to determine colors more satisfying the personalized requirement.

According to the method of image processing provided by the embodiment, the color editing page associated with the target color information is displayed based on the triggering operation by the user on any target color information in the color-picking color card. Thus, the user may realize the editing operation on the target color information in the color editing page. In this way, the color information in the color card is more suitable for the actual requirement of the user, and then a better image processing effect can be obtained based on the color card.

Further, on the basis of any of the above embodiments, the color card color-picking page further includes a predetermined generation control.

The displaying the color-picking color card in the color processing page includes: displaying the color-picking color card in the color processing page in response to a triggering operation by the user on the generation control.

In this embodiment, the color card color-picking page further includes a predetermined generation control. After the color-picking image and the corresponding color-picking color card are displayed separately, if the current color-picking color card meets the actual requirement of the user, the color-picking color card may be displayed in the color processing page through the triggering operation by the user on the generation control for user selection.

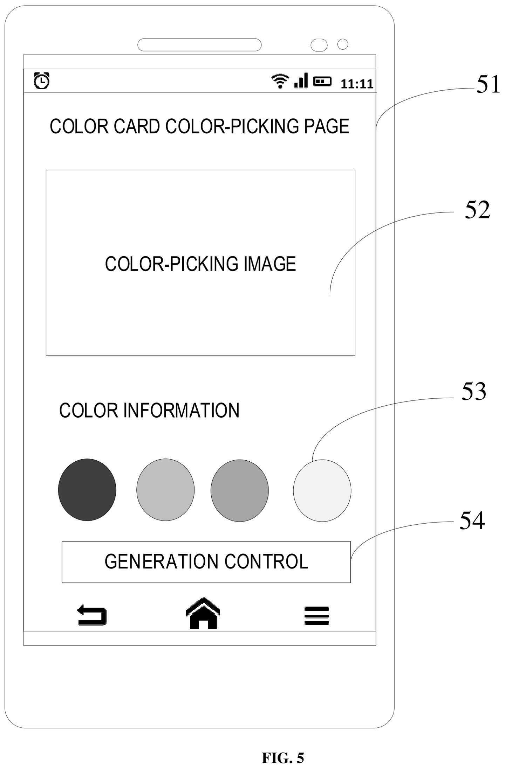

FIG. 5 is a schematic diagram of a display interface provided according to an embodiment of the present disclosure. As shown in FIG. 5, the first display area of the color card color-picking page 51 displays the color-picking image 52, and the second display area of the color card color-picking page 51 displays the color-picking color card 53 associated with the color-picking image. In addition, the color card color-picking page 51 further includes a predetermined generation control 54. The color-picking color card may be displayed in the color processing page for user selection through the triggering operation by the user on the generation control 53.

According to the method of image processing provided by the embodiment, the generation control is set in advance, so that the display of the color-picking color card in the color processing page can be quickly realized based on the generation control. Thus, the interaction mode of image processing is enriched, and the process of generation of color-picking color card is simplified.

In some embodiments, on the basis of any of the above embodiments, step 302 includes: recognizing the color information of the full image of the color-picking image through a predetermined color recognition algorithm.

In this embodiment, in order to implement the color recognition operation on the color-picking image, a plurality of different color recognition algorithms may be set in advance. In practical applications, the user may select one or more of the color recognition algorithms to perform the color recognition operation according to actual requirements.

In some embodiments, the predetermined color recognition algorithm includes, but is not limited to, an intelligent classification method, an intelligent clustering method, a super-pixel method, and a perceptual weighting method. In some embodiments, the intelligent classification method refers to the Haishoku method, and is optimized based on the RGB color space. The RGB channels of the color-picking image are automatically divided into categories based on the maximum value and the minimum value, and then the average value is calculated respectively to output. The intelligent clustering method may cluster colors in the color-picking image by using a Kmeans algorithm according to a specified number of color-picking, and use a center of each cluster as a representative value of each color. The super-pixel method uses each color block as a minimum computing unit for color. The super-pixel calculation may be used as a sub-module of other color-picking algorithms. The perceptual weighting method gives a higher weight to the color with high saturation and lightness, which can be used as a sub-module of other color-picking algorithms.

After the color-picking image is obtained, the color information of the full image of color-picking image may be recognized by using a color recognition algorithm.

According to the method of image processing provided in this embodiment, the color recognition algorithm is predetermined, and the global color recognition is performed based on the color recognition algorithm, so that the color information corresponding to the color-picking image can be accurately determined.

In some embodiments, on the basis of any of the foregoing embodiments, step 303 includes: recognizing a foreground area, a background area, and a text area in the color-picking image; performing a recognition operation on colors corresponding to the foreground area, the background area and the text area respectivley by a predetermined color recognition algorithm to obtain the recognition result.

The step 304 includes: generating the color-picking color card corresponding to the color-picking image based on the colors corresponding to the foreground area, the background area, and the text content in the recognition result.

In this embodiment, the color-picking image may include a foreground area, a background area, and text content. For example, the foreground area may display a predetermined article image, and the text content may be a text description corresponding to the article. The background area may display a background image with texture.

In order to accurately recognized the color of the color-picking image, the color corresponding to the foreground area, the background area, and the text content may be respectively recognized through a predetermined color recognition algorithm to obtain the recognition result. The color-picking color card in the color-picking image is determined based on the colors corresponding to foreground area, the background area, and the text content in the recognition result.

In some embodiments, based on any of the foregoing embodiments, generating the color-picking color card corresponding to the color-picking image based on the colors corresponding to the foreground area, the background area and the text content in the recognition result comprises: determining, in colors corresponding to the foreground area, the background area, and the text content, at least one target color having a color proportion exceeding a preset proportion threshold, respectively; generating the color-picking color card corresponding to the color-picking image based on the at least one target color.

In this embodiment, at least one target color having a color proportion exceeding a preset proportion threshold in colors corresponding to the foreground area, the background area, and the text content, is selected respectively as the color-picking color card corresponding to the color-picking image. In some embodiments, at least one target color having color proportion exceeding the preset proportion threshold may be a target color with the largest color proportion. Alternatively, colors corresponding to the foreground area, the background area, and the text content may be ranked according to a color proportion, and the top N colors are used as color information in the color-picking image. This is not limited in the present disclosure.

Further, on the basis of any of the above embodiments, the decoration material comprises a background decoration and a text decoration. Step 104 includes: switching a color of the background decoration to a color corresponding to the foreground area; switching a color of the text decoration to a color corresponding to the text content, to obtain the target image.

In this embodiment, after the colors corresponding to the foreground area, the background area, and the text content are determined, the color adjustment operation may be performed based on the colors corresponding to the background area and the text content. In some embodiments, the color of the background decoration may be switched to the color corresponding to the foreground area. The color of the text decoration is switched to the color corresponding to the text content to obtain the target image.

According to the method of image processing provided by the embodiment, the colors corresponding to the foreground area, the background area and the text content is respectively recognized, and the color-picking color card corresponding to the color-picking image is determined based on the colors corresponding to foreground area, the background area and the text content in the recognition result. In this way, the accuracy of generation of color-picking color card can be improved.

In some embodiments, on the basis of any of the above embodiments, step 302 includes: determining a deletion area determined by the user based on the color-picking image; recognizing, by a predetermined color recognition algorithm, color information of an area other than the deletion area in the color-picking image.

In this embodiment, the color of some areas in the color-picking image maybe not meet the personalized requirement of the user. Therefore, the user may determine the deletion area according to actual requirements. For example, the user may determine the deletion area by applying a painting operation on the color-picking image. For example, if the color-picking image is a portrait image, the user may determine areas such as skin and hair as deletion areas.

Further, after determining the deletion area, the deletion area in the color-picking image may be deleted. The color information of the area other than the deletion region is recognized to obtain the color information corresponding to the color-picking image.

According to the method of image processing provided in this embodiment, the color information of the area other than the deletion area in the color-picking image is recognized by using the color recognition algorithm. Therefore, the color information of the recognized color-picking image can be more suitable for the personalized requirement of the user.

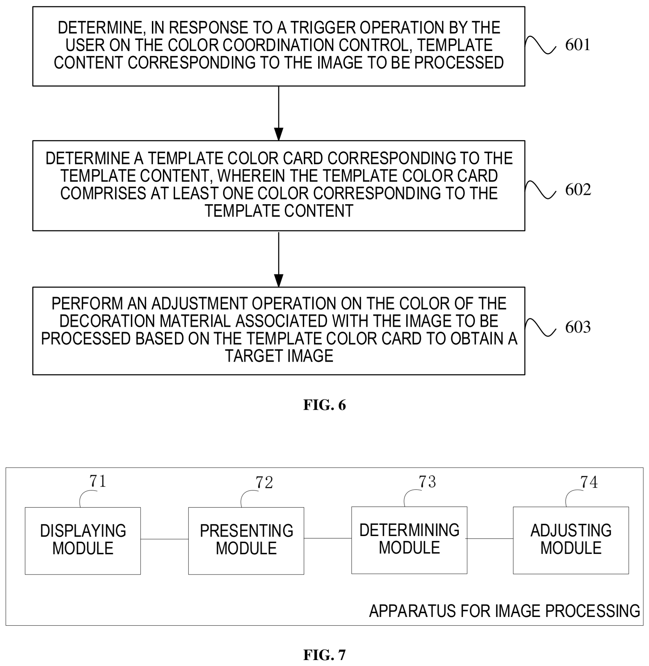

FIG. 6 is a schematic flowchart of a method of image processing according to still another embodiment of the present disclosure. Based on any of foregoing embodiments, the color processing page further comprises a color coordination control. After step 102, the method further includes:
Step 601: determining, in response to a triggering operation by the user on the color coordination control, template content corresponding to the image to be processed;
Step 602: determining a template color card corresponding to the template content. In some embodiments, the template color card comprises at least one color corresponding to the template content.

Step 603: performing an adjustment operation on the color of the decoration material associated with the image to be processed based on the template color card to obtain the target image.

In this embodiment, the image to be processed may be generated based on the image material generated by the user and the predetermined template content. In order to perform the color adjustment of the image to be processed, the color processing page further includes a color coordination control. Based on the color coordination control, a color harmonized template color card may be determined based on the template content, and a color adjustment operation may be implemented based on the template color card.

In some embodiments, the template content corresponding to the image to be processed is determined in response to a triggering operation by the user on the color coordination control. The template color card corresponding to the template content is determined. In some embodiments, the template color card includes at least one color corresponding to the template content. In some embodiments, the color recognition operation on the template color card may be implemented by using any of the above color recognition methods. The color of the decoration material associated with the image to be processed is adjusted based on the template color card to obtain the target image.

Further, on the basis of any of the foregoing embodiments, step 104 includes: determining a first color mode corresponding to the image to be processed; adjusting the image to be processed from the first color mode to a second color mode.

In the second color mode, the color of the decoration material associated with the image to be processed is adjusted based on the target color card to obtain the target image.

In this embodiment, since the image to be processed includes text decoration, in order to make the text decoration more prominent, the contrast between the text decoration and the underlying display content may be increased. In order to adjust the contrast, the first color mode corresponding to the image to be processed may be determined. The image to be processed is adjusted from the first color mode to the second color mode. For example, the image to be processed may be an RGB mode, and the image to be processed in the RGB mode may be converted to the LAB mode. In the second color mode, the color of the decoration material associated with the image to be processed is adjusted based on the target color card to obtain the target image.

According to the method of image processing provided by the embodiment, the color coordination control is set in advance, so that the image color adjustment can be quickly realized based on the color coordination control according to the template color card of the image to be processed. Thus, the image processing process is simplified, and the high-quality image processing effect can be obtained based on the template color card.

FIG. 7 is a schematic structural diagram of an apparatus for image processing according to an embodiment of the present disclosure. As shown in FIG. 7, the apparatus includes a displaying module 71, a presenting module 72, a determining module 73 and a adjusting module 74. In some embodiments, the displaying module 71 is configured to display an image processing page. In some embodiments, the image processing page comprises an image to be processed and a predetermined processing control, and the image to be processed is composed of at least one image material and a decoration material. The presenting module 72 is configured to present a color processing page in response to a triggering operation on the processing control. In some embodiments, the color processing page comprises at least one color processing category, and at least some of the color processing categories comprise at least one color card composed of different colors. The determining module 73 is configured to determine a target color card selected by a user in response to a selection by the user on the color processing page. The adjusting module 74 is configured to perform an adjustment operation on a color of the decoration material associated with the image to be processed based on the target color card to obtain a target image.

Further, based on any foregoing embodiments, the color processing page further comprises a color card adding control. The apparatus further includes a displaying module, configured to enter a color card color-picking page in response to a trigger opertion on the color card adding control. In some embodiments, the color card color-picking page comprises a picture uploading control. The apparatus further includes an obtaining module, configured to obtain a color-picking image in response to a triggering operation on the picture uploading control. The apparatus further includes a recognizing module, configured to recognize color information in the color-picking image. The apparatus further includes a generation module, configured to generate a color-picking color card based on a recognition result of the color information. The apparatus further includes a presenting module, configured to display the color-picking color card in the color processing page.

Further, based on any foregoing embodiments, the apparatus also includes a presenting module, configured to display the color-picking image in a first display area in the color card color-picking page, and display a color-picking color card associated with the color-picking image in a second display area in the color card color-picking page.

Further, based on any foregoing embodiments, the first display area further comprises a predetermined switching control. The apparatus further comprises: a obtaining module, configured to obtain a color-picking replacement image in response to a triggering operation on the switching control, and switch to display the color-picking replacement image in the first display area; a recognizing module, configured to recognize color information in the color-picking replacement image, and display a color-picking color card of the color-picking replacement image in the second display area.

Further, based on any foregoing embodiments, the recognizing module is configured to: recognize a foreground area, a background area, and a text area in the color-picking image; perform a recognition operation on colors corresponding to the foreground area, the background area and the text area respectivley by a predetermined color recognition algorithm to obtain the recognition result; the generation module, configured to generate the color-picking color card corresponding to the color-picking image based on the colors corresponding to the foreground area, the background area, and the text content in the recognition result.

Further, based on any foregoing embodiments, the generation module is configured to determine, in colors corresponding to the foreground area, the background area, and the text content, at least one target color having a color proportion exceeding a preset proportion threshold, respectively; and generate the color-picking color card corresponding to the color-picking image based on the at least one target color.

Further, based on any foregoing embodiments, the decoration material comprises a background decoration and a text decoration. The adjusting module is configured to: switch a color of the background decoration to a color corresponding to the background area; and switch a color of the text decoration to a color corresponding to the text content, to obtain the target image.

Further, based on any foregoing embodiments, the recognizing module is configured to: determine a deletion area determined by the user based on the color-picking image; and recognize, by a predetermined color recognition algorithm, color information of an area other than the deletion area in the color-picking image.

Further, based on any foregoing embodiments, the apparatus further includes a switching module, configured to switch to present, in response to a sliding operation by the user in a predetermined direction in the color processing page, color cards corresponding to different color processing categories.

Further, based on any foregoing embodiments, the color processing page further comprises a color coordination control. The apparatus further includes: a determining module, configured to determine, in response to a triggering operation by the user on the color coordination control, template content corresponding to the image to be processed; and a determining module, configured to determine a template color card corresponding to the template content, in some embodiments, the template color card comprises at least one color corresponding to the template content; and an adjusting module, configured to perform an adjustment operation on the color of the decoration material associated with the image to be processed based on the template color card to obtain the target image.

Further, based on any foregoing embodiments, the adjusting module is configured to: determine a first color mode corresponding to the image to be processed; adjust the image to be processed from the first color mode to a second color mode; adjust, in the second color mode, the color of the decoration material associated with the image to be processed based on the target color card to obtain the target image.

In order to implement the foregoing embodiments, an embodiment of the present disclosure further provides an electronic device, including: a processor and a memory.

The memory stores computer executable instructions.

The processor executes the computer-executable instructions stored in the memory, to cause the processor to execute the method of image processing according to any one of the above embodiments.

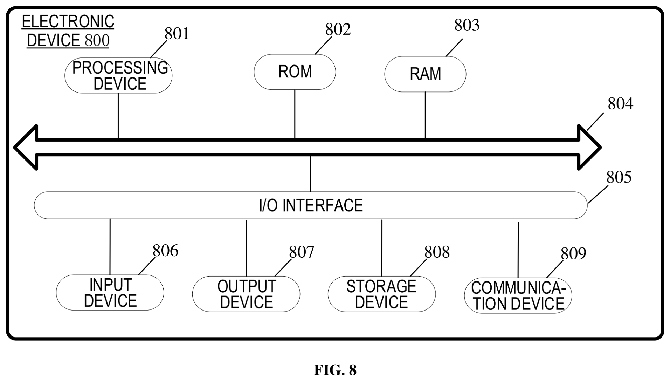

FIG. 8 is a schematic structural diagram of an electronic device according to an embodiment of the present disclosure. As shown in FIG. 8, the electronic device may be a terminal device or a server. The terminal device may include, but is not limited to, a mobile terminal such as a mobile phone, a notebook computer, a digital broadcast receiver, a personal digital assistant (PDA), a portable Android device (PAD), a portable media player (PMP), an in-vehicle terminal (for example, an in-vehicle navigation terminal), and a fixed terminal such as a digital TV, a desktop computer, or the like. The electronic device shown in FIG. 8 is merely an example, and should not impose any limitation on the functions and scope of use of the embodiments of the present disclosure.

As shown in FIG. 8, the electronic device 800 may include a processing device (for example, a central processing unit, a graphics processor, etc.) 801, which may perform various appropriate actions and processing according to a program stored in a read only memory (ROM) 802 or a program loaded into a random access memory (RAM) 803 from a storage device 808. In the RAM 803, various programs and data required by the operation of the electronic device 800 are also stored. The processing device 801, the ROM 802, and the RAM 803 are connected to each other through a bus 804. Input/output (I/O) interface 805 is also connected to bus 804.

Generally, the following devices may be connected to the I/O interface 805: an input device 806 including, for example, a touch screen, a touch pad, a keyboard, a mouse, a camera, a microphone, an accelerometer, a gyroscope, etc.; an output device 807 including, for example, a liquid crystal display (LCD), a speaker, a vibrator, etc.; a storage device 808 including, for example, a magnetic tape, a hard disk, etc.; and a communication device 809. The communication device 809 may allow the electronic device 800 to communicate wirelessly or wired with other devices to exchange data. While FIG. 8 shows an electronic device 800 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product comprising a computer program embodied on a computer readable medium, the computer program comprising program code for performing the method shown in the flowchart. In such embodiments, the computer program may be downloaded and installed from the network through the communication device 809, or installed from the storage device 808, or from the ROM 802. When the computer program is executed by the processing device 801, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, apparatus, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

In order to implement the foregoing embodiments, an embodiment of the present disclosure further provides a computer-readable storage medium, which stores a computer-executable instruction. When the processor executes the computer-executable instruction, the method of image processing according to any of the foregoing embodiments is implemented.

In order to implement the foregoing embodiments, an embodiment of the present disclosure further provides a computer program product, including a computer program which, when executed by a processor, implements the method of image processing according to any of the foregoing embodiments.

The computer-readable medium described above may be included in the electronic device; or may be separately present without being assembled into the electronic device.

The computer-readable medium carries one or more programs. When the one or more programs are executed by the electronic device, to enable the electronic device to perform the method described in the foregoing embodiments.

Computer program code for performing the operations of the present disclosure may be written in one or more programming languages, including object-oriented programming languages, such as Java, Smalltalk, C++, and conventional procedural programming languages, such as the "C" language or similar programming languages. The program code may execute entirely on a user computer, partially on a user computer, as a standalone software package, partially on a user computer and partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. The name of a unit does not constitute a constraint on the unit itself under certain circumstances. For example, the first obtaining unit may be further described as "a unit for obtaining at least two Internet Protocol addresses".

The functions described above may be performed, at least in part, by one or more hardware logic components. For example, without limitation, illustrative types of hardware logic components that may be used include: field programmable gate arrays (FPGAs), application specific integrated circuits (ASICs), application specific standard products (ASSPs), systems-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, a technical solution may be formed by replacing the above features with (but not limited to) technical features with similar functions disclosed in this disclosure.

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method of image processing, comprising:
displaying an image processing page, wherein the image processing page comprises an image to be processed and a predetermined processing control, and the image to be processed is composed of at least one image material and a decoration material;
presenting a color processing page in response to a triggering operation on the processing control, wherein the color processing page comprises at least one color processing category, and at least some of the color processing categories comprise at least one color card composed of different colors;
determining a target color card selected by a user in response to a selection operation on the color processing page;
performing an adjustment operation on a color of the decoration material associated with the image to be processed based on the target color card to obtain a target image.

2. The method of claim 1, wherein the color processing page further comprises a color card adding control;
entering a color card color-picking page in response to a trigger opertion on the color card adding control, wherein the color card color-picking page comprises a picture uploading control;
obtaining a color-picking image in response to a triggering operation on the picture uploading control;
recognizing color information in the color-picking image;
generating a color-picking color card based on a recognition result of the color information;
displaying the color-picking color card in the color processing page.

3. The method of claim 2, wherein the method further comprises:
displaying the color-picking image in a first display area in the color card color-picking page, and displaying a color-picking color card associated with the color-picking image in a second display area in the color card color-picking page.

4. The method of claim 3, wherein the first display area further comprises a predetermined switching control; and the method further comprises:
obtaining a color-picking replacement image in response to a triggering operation on the switching control, and switching to display the color-picking replacement image in the first display area;
recognizing color information in the color-picking replacement image, and displaying a color-picking color card of the color-picking replacement image in the second display area.

5. The method of claim 2, wherein recognizing color information in the color-picking image comprises:
recognizing a foreground area, a background area, and a text area in the color-picking image;
performing a recognition operation on colors corresponding to the foreground area, the background area and the text area respectivley by a predetermined color recognition algorithm to obtain the recognition result;
generating the color-picking color card based on the recognition result of the color information comprises:
generating the color-picking color card corresponding to the color-picking image based on the colors corresponding to the foreground area, the background area, and the text content in the recognition result.

6. The method of claim 5, wherein generating the color-picking color card corresponding to the color-picking image based on the colors corresponding to the foreground area, the background area and the text content in the recognition result comprises:
determining, in colors corresponding to the foreground area, the background area, and the text content, at least one target color having a color proportion exceeding a preset proportion threshold, respectively;
generating the color-picking color card corresponding to the color-picking image based on the at least one target color.

7. The method of claim 5, wherein the decoration material comprises a background decoration and a text decoration;
performing the adjustment operation on the color of the decoration material associated with the image to be processed based on the target color card to obtain the target image comprises:
switching a color of the background decoration to a color corresponding to the background area;
switching a color of the text decoration to a color corresponding to the text content, to obtain the target image.

8. The method of claim 2, wherein recognizing color information in the color-picking image comprises:
determining a deletion area determined by the user based on the color-picking image;
recognizing, by a predetermined color recognition algorithm, color information of an area other than the deletion area in the color-picking image.

9. The method of any of claims 1-8, wherein after presenting a predetermined color processing page in response to the triggering operation by the user on the processing control, the method further comprises:
switching to present, in response to a sliding operation by the user in a predetermined direction in the color processing page, color cards corresponding to different color processing categories.

10. The method of any of claims 1-8, wherein the color processing page further comprises a color coordination control;
after presenting a predetermined color processing page in response to the triggering operation by the user on the processing control, the method further comprises:
determining, in response to a triggering operation by the user on the color coordination control, template content corresponding to the image to be processed;
determining a template color card corresponding to the template content, wherein the template color card comprises at least one color corresponding to the template content;
performing an adjustment operation on the color of the decoration material associated with the image to be processed based on the template color card to obtain the target image.

11. The method of any of claims 1-8, wherein performing the adjustment operation on the color of the decoration material associated with the image to be processed based on the target color card to obtain the target image comprises:
determining a first color mode corresponding to the image to be processed;
adjusting the image to be processed from the first color mode to a second color mode;
adjusting, in the second color mode, the color of the decoration material associated with the image to be processed based on the target color card to obtain the target image.

12. An apparatus for image processing, comprising:
a displaying module configured to display an image processing page, wherein the image processing page comprises an image to be processed and a predetermined processing control, and the image to be processed is composed of at least one image material and a decoration material;
a presenting module configured to present a color processing page in response to a triggering operation on the processing control, wherein the color processing page comprises at least one color processing category, and at least some of the color processing categories comprise at least one color card composed of different colors;
a determining module configured to determine a target color card selected by a user in response to a selection by the user on the color processing page;
an adjusting module configured to perform an adjustment operation on a color of the decoration material associated with the image to be processed based on the target color card to obtain a target image.

13. An electronic device, comprising: a processor and a memory;
the memory stores computer executable instructions;
the processor executes the computer executable instructions stored in the memory, causing the processor to execute the method of image processing according to any of claims 1 to 11.

14. A computer-readable storage medium storing computer-executable instructions which, when executed by a processor, implement the method of image processing of any of claims 1 to 11.

15. A computer program product, comprising a computer program, wherein the computer program, when executed by a processor, implements the method of image processing of any of claims 1 to 11.
